# EUROPEAN PATENT SPECIFICATION

(11) **EP 3 769 388 B1**
(45) Date of publication and mention of the grant of the patent: **12.10.2022**
(21) Application number: 18712888.9
(22) Date of filing: 22.03.2018
(51) Int. Cl.: H02H 3/32, H02H 3/34, H02H 7/12, H02M 1/32, H02H 9/00, H02H 9/02

(54) **NEUTRAL CIRCUIT ARRANGEMENT**
NEUTRALSCHALTUNGSANORDNUNG
AGENCEMENT DE CIRCUIT NEUTRE

(43) Date of publication of application: 27.01.2021
(73) Proprietor: Hitachi Energy Switzerland AG, 5400 Baden (CH)
(72) Inventor: KANNAN, Vinothkumar, 600128 Chennai (IN); JIANG-HÄFNER, Ying, 771 42 Ludvika (SE)
(74) Representative: AWA Sweden AB
(86) International application number: PCT/EP2018/057277
(87) International publication number: WO 2019/179624

(56) References cited:
- WO-A1-2017/186262
- US-A1- 2015 002 977

## Description

### Technical field

The present disclosure relates to the field of high-voltage direct current (HVDC) power transmission systems including one or more voltage source converters (VSCs). In particular, the present disclosure relates to handling of fault currents on a direct current (DC) neutral line of HVDC power transmission systems.

### Background

With VSCs proving more proficient in control and performance, multiterminal VSC DC grid configurations are emerging. In a DC grid operation scenario, it may be necessary that a current at breaking in for example hybrid HVDC breakers (HHB) is within the rated capacity of the HHB. As a consequence, such DC grids may be equipped with current limiting reactors (CLR) connected in series with a HHB on a DC pole line but also on a DC neutral line. The one or more CLRs may restrict for example a fault current to below the rated capacity of the corresponding HHB during e.g. a fault current interruption.

The duration of transient currents during such a fault current interruption, for example due to a single phase fault at the alternating current (AC) converter bus, may be long enough to impose extra stress on for example diodes in a lower valve arm of a VSC. This may increase the requirements on the valve arms of the VSC, both in terms of capacity and stress tolerance. Additional cooling arrangements may also be required, increasing both cost and footprint.

An example of prior art can be found in WO2017/186262, which discloses a circuit breaker for an HVDC power transmission system. Another less relevant example of prior art can be found in US2015/002977, which discloses a circuit breaker for interrupting high voltage direct current flowing through electrical energy transmission network.

In the light of the above, there is therefore a need for an improved arrangement for fault current handling.

### Summary

The present invention seeks to at least partly fulfill the above need. To achieve this, a circuit arrangement for decaying of transient current flow, a VSC station, a HVDC power transmission system, a method of modifying a HVDC power transmission system and a method of operating a circuit arrangement as defined in the independent claims are provided. Further embodiments are provided in the dependent claims.

According to a first aspect of the present invention, as defined in the appended claim 1, a (neutral) circuit arrangement is provided. The (neutral) circuit arrangement may be for decaying of a transient current flow between a first point and a second point on a DC neutral line of a HVDC power transmission system. The (neutral) circuit arrangement includes a first branch including a first winding and a resistive element connected in series. The (neutral) circuit arrangement includes a second branch including a second winding and a switching element connected in series. The first branch and the second branch are connected in parallel between the first point and the second point. An inductance of the first winding is smaller than an inductance of the second winding. During normal operation, the switching element configured to be closed and current take a path in the neutral circuit arrangement via the second branch and the second winding, as the first branch including the resistive element may offer a higher impedance for DC current. Phrased differently, the flow of current between the first point and the second point, on the DC neutral line, may remain unchanged during normal operation conditions.

During a fault current occurrence, the effective circuit resistance may be increased and the effective circuit inductance may be decreased. This may increase the decaying rate of a transient current in e.g. a lower valve arm of the VSC, such that transient current may decay faster. During normal operation, e.g. when there is no current fault, the operation may remain unaffected.

During for example a converter bus fault (such as e.g. an alternating current, AC, converter bus fault), the second branch may offer a higher impedance than the first branch due to the inductance of the second winding being higher than the inductance of the first winding. This may result in a decreasing current through the second branch while the current through the parallel, first branch may start to increase owing to the lower inductance of the first winding.

When the current through the second winding falls below the interruption capability of the switching element, the switching element may be opened. Opening the switching element may completely commutate the transient current to the first branch and the first winding. The neutral circuit arrangement may see an increased effective resistance and a decreased effective inductance in the circuit. This may reduce a current decay time. A (fault) current through e.g. the lower valve arm of the VSC may decay faster.

In some embodiments, the neutral circuit arrangement includes a third winding connected to the first point. If the neutral circuit arrangement is to be connected to e.g. a VSC station, the third winding may e.g. form the connection between the VSC station and the first point.

In some embodiments, the second winding and the third winding may form part of a same current limiting reactor (CLR). For example, part of the total winding of the CLR may form the third winding, and the remaining part of the total winding of the CLR may form the second winding. The point of splitting the total winding of the CLR into the third and second windings may for example be the first point.

In some embodiments, a sum of the inductance of the second winding and the third winding equal a (total) inductance of the CLR.

In some embodiments, the first winding and the second winding form part of a mutual inductor. Phrased differently, the first winding and the second winding may be magnetically (and mutually) coupled. During the converter bus fault, the impedance of the second branch may be increased due to voltage opposition, generated from the coupled first winding and second winding, to the flow of current. Similarly, in the first branch, the current aiding nature of the coupled windings of the mutual inductor may help to increase the flow of current.

In some embodiments, the switching element is one of a high-speed switch (HSS) and a neutral bus switch (NBS).

In some embodiments, the first branch is arranged such that the resistive element is between the first winding and the second point.

In some embodiments, the second branch is arranged such that the switching element is between the second winding and the second point.

According to a second aspect of the present invention as defined in claim 9, a VSC station is provided. The VSC station may include the neutral circuit arrangement according to the first aspect.

According to a third aspect of the present invention as defined in claim 10, a HVDC power transmission system is provided. The HVDC power transmission system may include at least a DC neutral line. The HVDC power transmission system includes the VSC station according to the second aspect, or, the HVDC power transmission may include a VSC station and the neutral circuit arrangement according to the first aspect. The neutral circuit arrangement may connect the VSC station to the DC neutral line. When connecting the VSC station to the DC neutral line, a current on the DC neutral line may at least partly flow between the first point and the second point of the arrangement. Herein, when referring to a VSC station and a neutral circuit arrangement, it is envisaged also that the neutral circuit arrangement may form an integrated part of the VSC station.

In some embodiments, the HVDC power transmission system further includes
a second VSC station (which may be the VSC station according to the second aspect), or, the HVDC power transmission system includes
a second VSC station and a second neutral circuit arrangement (which may be the neutral circuit arrangement according to the first aspect). The second neutral circuit arrangement connects
the second VSC station to the DC neutral line. When connecting the second VSC to the DC neutral line, a current on the DC neutral line may at least partly flow between the first point and the second point of the second arrangement.

In some embodiments, the HVDC power transmission system is arranged in an asymmetric monopole configuration.

In some embodiments, of the VSC station according to the second aspect, or of the HVDC power transmission system according to the third aspect, the VSC station includes at least one half-bridge modular multi-level converter (HB-MMC).

According to a fourth aspect of the present invention as defined in claim 14, a method of modifying a HVDC power transmission system is provided. The HVDC power transmission system include a VSC station, a DC neutral line, and an existing CLR which may e.g. connect the VSC station to the DC neutral line. The method may include providing a neutral circuit arrangement according to the first aspect. The second winding of the neutral circuit arrangement may be, or form part of, the existing CLR.

In some embodiments, the HVDC power transmission network further includes an existing switching element connected in series with the existing CLR. The existing switching element may form part of (or be) the switching element of the neutral circuit arrangement.

According to a fifth aspect of the present invention as defined in claim 16, a method of operating a neutral circuit arrangement (such as the neutral circuit arrangement according to the first aspect, or as included in the VSC station according to the second aspect, or as included in the HVDC power transmission system according to the third aspect) during (an AC) converter bus fault is provided. The method may include determining whether a current through the second branch (of the neutral circuit arrangement) is within a current interruption capacity of the switching arrangement. The method may include opening the switching element, on a basis that it is determined that the current through the second branch is within the current interruption capacity of the switching element. The effect of this method may be as described earlier herein with reference to the neutral circuit arrangement according to the first aspect.

Further objects and advantages of the various embodiments of the present disclosure will be described below by means of exemplifying embodiments.

### Brief description of the drawings

Exemplifying embodiments will be described below with reference to the accompanying drawings, in which:
Figure 1 illustrates schematically a conventional HVDC power transmission system;
Figure 2 illustrates schematically an embodiment of a HVDC power transmission system including a neutral circuit arrangement according to the present invention;
Figures 3a and 3b illustrate schematically various embodiments of a neutral circuit arrangement according to the present invention, and
Figure 4 illustrates schematically an embodiment of a VSC station including a neutral circuit arrangement according to the present invention.

In the drawings, like reference numerals will be used for like elements unless stated otherwise. Unless explicitly stated to the contrary, the drawings show only such elements that are necessary to illustrate the example embodiments, while other elements, in the interest of clarity, may be omitted or merely suggested. As illustrated in the figures, the sizes of elements and regions may be exaggerated for illustrative purposes and, thus, are provided to illustrate the general structures of the embodiments.

### Detailed description

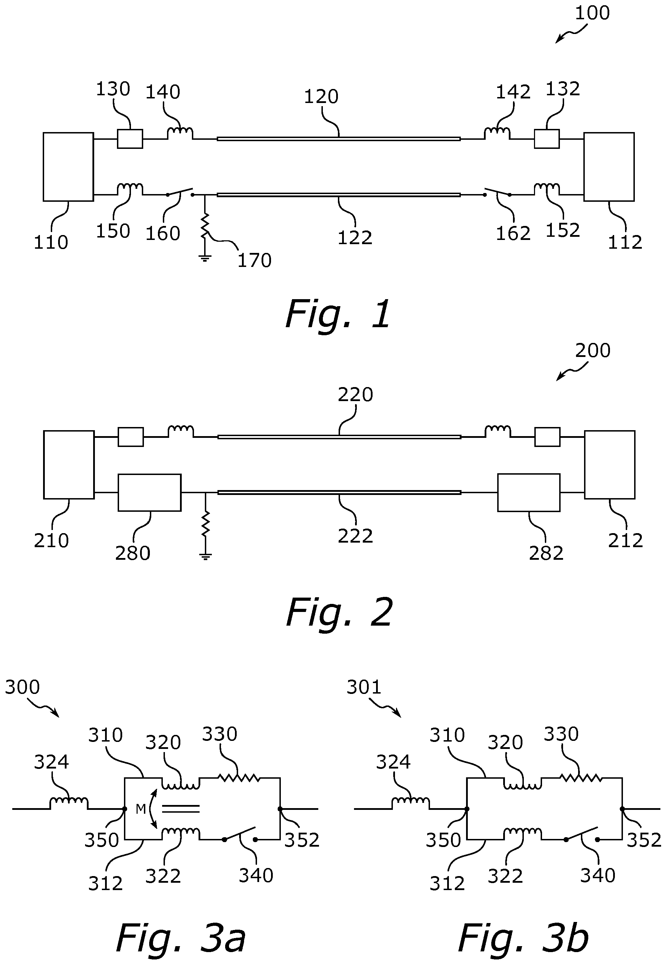

Figure 1 illustrates a (conventional) HVDC power transmission system 100. The system 100 is arranged in an asymmetric monopole configuration and includes a first VSC station 110 and a second VSC station 112. One or both of the VSC stations 110 and 112 may e.g. include one or more modular multilevel converters (MMCs). One or more of the MMCs may for example be a half-bridge MMC (HB-MMC).

The first VSC station 110 and the second VSC station 112 are connected via a DC link. The DC link includes a DC pole line 120 and a DC neutral line 122. The first VSC station 110 is connected to the DC pole line 120 via a hybrid HVDC breaker (HHB) 130 and a current limiting reactor (CLR) 140. The first VSC station 110 is connected to the DC neutral line 122 via a CLR 150 and a switching element 160. The second VSC station 112 is connected to the DC pole line 120 via a HHB 132 and a CLR 142. The second VSC station 112 is connected to the DC neutral line 122 via a CLR 152 and a switching element 162. The DC neutral line 122 has a grounding impedance 170.

For DC grid applications, inductances of the CLRs 140, 142, 150 and 152 may for example be large enough to reduce a fault current peak to below a rating of the DC breakers. During for example a single phase converter bus fault, a transient decay time for current in e.g. the lower valve arm of e.g. the VSC 110 may be longer. A time for a current at point of common coupling (PCC) to reach zero may also be longer.

With reference to Figures 2 and 3, a HVDC power transmission system and a neutral circuit arrangement according to the present invention will be described in the following.

Figure 2 illustrates schematically an example of a HVDC power transmission system 200. The system 200 is the same as the system 100 described above with reference to Figure 1, except that the CLR 150 and the switching element 160 has been replaced/modified by a neutral circuit arrangement 280, and except that the CLR 152 and the switching element 162 has been replaced/modified by a second neutral circuit arrangement 282.

It is envisaged also that the HVDC power transmission system 200 may include more than two VSC stations, each connected to the DC pole line 220 and the DC neutral line 222.

Figures 3a and 3b illustrate schematically embodiments of neutral circuit arrangements 300 and 301. The neutral circuit arrangements 300 and 301 may for example correspond to the neutral circuit arrangements 280 or 282 in the system 200 as illustrated in Figure 2.

The arrangement 300 as illustrated in Figure 3a includes a first branch 310 and a second branch 312. The first branch 310 may include a first winding 320 and a resistive element 330. The first winding 320 and the resistive element 330 may be connected in series. The second branch 312 may include a second winding 322 and a switching element 340. The second winding 322 and the switching element 340 may be connected in series. The first branch 310 and the second branch 312 may be connected in parallel between a first point 350 and a second point 352.

The first winding 320 and the second winding 322 may be arranged such that they are mutually coupled, and forms part of a mutual inductor M. The polarity of the mutual inductor M is not indicated in Figure 3a. If using the "dot convention", it is envisaged e.g. that the polarity is such that a dot would be inserted, in Figure 3a, to the left of each of the first winding 320 and the second winding 322.

The switching element 340 may for example be a high-speed switch (HSS) or a neutral bus switch (NBS). It is envisaged also that other suitable switching elements may be used.

The neutral circuit arrangement 300 also includes (or may include) a third winding 324. The third winding 324 may be connected to the first point 350. The arrangement 300 may for example be connected at one end to a VSC station (not shown) via the third winding 324.

The DC neutral line may for example be connected to the neutral circuit arrangement 300 at the second point 352, and the VSC station may be connected to the neutral circuit arrangement 300 e.g. at the left end of the third winding 324.

As described earlier herein, the third winding 324 and the second winding 322 may be individual components (i.e. individual windings not part of a same inductor). It is also envisaged that the third winding 324 and the second winding 322 may form part of a same inductor, for example a CLR. In this case, the point of splitting the total winding of the CLR into the third winding 324 and the second winding 322 may then be the first point 350.

An inductance of the first winding 320 may be denoted L₁, an inductance of the second winding 322 may be denoted L₂, and an inductance of the third winding 324 may be denoted L₃. If the third winding 324 and the second winding 322 form part of a same CLR, the total inductance of the CLR, denoted LCLR, may be such that LCLR = L2 + L3. It is envisaged also that the third winding 324 may be optional, and that e.g. the second winding 322 is the full CLR such that L_{CLR} = L₂ and L₃ = 0.

The inductances of the first winding 320 and the second winding 322 may be selected such that L₁ < L₂.

During normal operation of a VSC connected to the DC neutral line via the neutral circuit arrangement 300, the first branch 310 may present a higher impedance to steady state current than the second branch 312 due to the resistive element 330. If the switching element 340 is closed, current may pass through the second branch 312 and the presence of the neutral circuit arrangement 300 may have leave the DC current flow unaffected.

During for example a single phase AC converter bus fault, the higher inductance of the second winding 322 may introduce a higher impedance for current through the second branch 312. Current may then start to flow through the first branch 310 (where the impedance is lower owing to the lower inductance of the first winding 320). Eventually, enough current may be diverted through the first branch 310 for the current in the second branch 312 to be within the current interruption capability of the switching element 340. The switching element 340 may then be opened, thereby fully commutating the current flow through the first branch 310.

The arrangement 300 may see an increased effective resistance (R) and a decreased effective inductance (L). The increased effective resistance and the decreased effective inductance may increase the decay rate and reduce the decay time. A time constant of the circuit may be reduced with reduced effective inductance and increased effective resistance in the transient current path. This may present an improvement when compared to the (conventional) HVDC power transmission system as described with reference to Figure 1, in terms of for example a shorter transient decay time for current in e.g. the lower valve arm of the converter, and/or a shorter time for a current at point of common coupling (PCC) to reach zero.

The arrangement 301 as illustrated in Figure 3b is similar to the arrangement 300 as illustrated in Figure 3a, except that the first winding 320 and the second winding 322 do not form part of a mutual inductor. Instead, the first winding 320 and the second winding 322 are individual windings/inductors which are not mutually coupled.

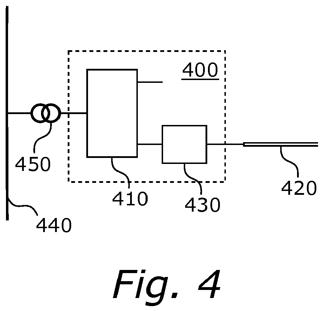

With reference to Figure 4, an embodiment of a VSC station according to the present invention will be described in the following.

Figure 4 illustrates schematically a VSC station 400. The VSC station 400 includes at least one VSC 410 and a neutral circuit arrangement 430. The neutral circuit arrangement 430 may be a neutral circuit arrangement as described herein (e.g. the neutral circuit arrangement 300 as illustrated in Figure 3a or the neutral circuit arrangement 301 as illustrated in Figure 3b), and may be arranged to connect the at least one VSC 410 and the VSC station 400 to a DC neutral line 420. The VSC station 400 may also, for example, be connected to an AC grid 440, for example by using at least one transformer 450. The VSC station 400 may include more than one VSC 410, and a plurality of VSCs 410 may for example be connected in series. The VSC station 400 may for example form part of a HVDC power transmission system, such as for example the HVDC power transmission system 200 as described herein with reference to Figure 2.

The present disclosure also provides methods related to the use of a neutral circuit arrangement according to the present invention.

In an embodiment of one such method, a HVDC power transmission system (such as the system 100 described herein with reference to Figure 1) may be upgraded/modified by providing a neutral circuit arrangement according to the present disclosure (such as the neutral circuit arrangement 300 described with reference to Figure 3a or the neutral circuit arrangement 301 described with reference to Figure 3b). If the HVDC power transmission system already includes an existing CLR on the DC neutral line, part or all of the existing CLR may be used to form the second (and optionally the third) winding of the neutral circuit arrangement. By so doing, the already existing CLR may be used. For example, the already existing CLR may be split into two windings at the first point. The partial winding of the CLR connected between the VSC station and the first point may be the third winding, and the partial winding of the CLR connected between the first point and the DC neutral line may be the second winding. The neutral circuit arrangement of the present invention may then be completed by providing the first winding, the resistive element and the breaking element as described herein.

If the HVDC power transmission system that is to be upgraded/modified already includes also an existing switching element (such as a HSS/NBS, connected for example in series with the already existing CLR), this existing switching element may be used as the switching element in the second branch of the neutral circuit arrangement.

The present invention also provides a method of operating a neutral circuit arrangement according to the present disclosure during a converter bus fault. As described herein, the neutral circuit arrangement may be included in a VSC station and/or in a HVDC power transmission system, and connected between the VSC station and a DC neutral line of the HVDC power transmission system. When the fault has been detected (which may be included as an optional first step of the method), the method may include a step wherein it is determined whether a current through the second branch (between the first point and the second point) is below (or within) a current interruption capability/capacity of the switching element. If it is determined that the current in/through the second branch is sufficiently low (e.g. below or within the current interruption capability/capacity of the switching element), the switching element may be opened to completely divert (commutate) the (fault) current through the first branch. The increased effective resistance and the decreased effective inductance of the neutral circuit arrangement may present the benefits with regards to reduced decaying time for valve arm current and time for PCC current to reach zero as described earlier herein. A reduction of the current transients may reduce the stress on e.g. valves in the VSC station. This may result in a reduced stress on diodes and on e.g. associated heat sink and cooling equipment. Outages in DC grids may also be reduced owing to reduced stress requirements to be handled.

Although features and elements are described above in particular combinations, each feature or element may be used alone without the other features and elements or in various combinations with or without other features and elements.

Additionally, variations to the disclosed embodiments may be understood and effected by the skilled person in practicing the claimed invention, from a study of the drawings, the disclosure, and the appended claims. In the claims, the word "comprising" does not exclude other elements, and the indefinite article "a" or "an" does not exclude a plurality. The mere fact that certain features are recited in mutually different dependent claims does not indicate that a combination of these features cannot be used to advantage.

## Claims

1. A circuit arrangement (300, 301) for decaying of a transient current flow between a first point (350) and a second point (352) on a direct current, DC, neutral line of a high-voltage direct current, HVDC, power transmission system, comprising:
a first branch (310) comprising a first winding (320) and a resistive element (330) connected in series, and
a second branch (312) comprising a second winding (322) and a switching element (340) connected in series,
wherein the first branch (310) and the second branch (312) are connected in parallel between the first point (350) and the second point (352),
**characterized in that**
an inductance of the first winding (320) is smaller than an inductance of the second winding (322), and **in that**
during normal operation, the switching element is configured to be closed and current takes a path in the circuit arrangement via the second branch and the second winding.

2. The circuit arrangement of claim 1, comprising a third winding (324) connected to the first point (350) and in series with the first and second branches (310, 312) being connected in parallel.

3. The circuit arrangement of claim 2, wherein the second winding (322) and the third winding (324) form part of a same current limiting reactor, CLR (140).

4. The circuit arrangement of claim 3, wherein a sum of the inductance of the second winding (322) and an inductance of the third winding (324) equals an inductance of the CLR (140).

5. The circuit arrangement of any one of the preceding claims, wherein the first winding (320) and the second winding (322) form part of a mutual inductor.

6. The circuit arrangement of any one of the preceding claims, wherein the switching element (340) is one of a high-speed switch, HSS, and a neutral bus switch, NBS.

7. The circuit arrangement of any one of the preceding claims, wherein the first branch (310) is arranged such that the resistive element (330) is between the first winding (320) and the second point (352).

8. The circuit arrangement of any one of the preceding claims, wherein the second branch (312) is arranged such that the switching element (340) is between said second winding (322) and the second point (352).

9. A voltage source converter, VSC, station (400) comprising a circuit arrangement (430) according to any one of the preceding claims.

10. A high-voltage direct current, HVDC, power transmission system (200) including at least a DC neutral line (222), further comprising:
a voltage source converter, VSC, station according to claim 9; or
a VSC station (210) and a circuit arrangement (280) according to any one of claims 1 to 8;
wherein the circuit arrangement (280) connects the VSC station (210) to the DC neutral line (222).

11. The HVDC power transmission system of claim 10, further comprising a second VSC station according to claim 9; or
a second VSC station (210) and a second circuit arrangement (282) according to any one of claims 1 to 8;
wherein the second circuit arrangement connects the second VSC station to the DC neutral line (222).

12. The HVDC power transmission system of claim 10 or 11, wherein said HVDC power transmission system is arranged in an asymmetric monopole configuration.

13. The VSC station of claim 9, or the HVDC power transmission system of any one of claims 10 to 12, wherein the VSC station includes at least one half-bridge modular multi-level converter, HB-MMC.

14. The HVDC power transmission system of any one of claims 10-13, further including an existing current limiting reactor, CLR, connecting the VSC station to the DC neutral line, wherein at least a part of the existing CLR forms the second winding of the circuit arrangement.

15. The HVDC power transmission system of claim 14, further including an existing switching element connected in series with the existing CLR, wherein said existing switching element forms part of the switching element of the circuit arrangement.

16. A method of operating a circuit arrangement according to any one of claims 1 to 8 during an alternating current, AC, converter bus fault, comprising:
determining whether a current through the second branch (312) is within a current interruption capacity of the switching element (340); and
opening the switching element, on a basis that it is determined that the current through the second branch is within the current interruption capacity of the switching element.

## Patentansprüche

1. Schaltungsanordnung (300, 301) zum Dämpfen eines transienten Stromflusses zwischen einem ersten Punkt (350) und einem zweiten Punkt (352) auf einer neutralen Gleichstrom(DC)-Leitung eines Hochspannungsgleichstrom(HVDC)-Leistungsübertragungssystems, die Folgendes umfasst:
einen ersten Zweig (310), der eine erste Wicklung (320) und ein Widerstandselement (330) umfasst, die in Reihe verbunden sind, und
einen zweiten Zweig (312), der eine zweite Wicklung (322) und ein Schaltelement (340) umfasst, die in Reihe verbunden sind,
wobei der erste Zweig (310) und der zweite Zweig (312) zwischen dem ersten Punkt (350) und dem zweiten Punkt (352) parallel verbunden sind, und
**dadurch gekennzeichnet, dass** eine Induktanz der ersten Wicklung (320) kleiner ist als eine Induktanz der zweiten Wicklung (322), und
dadurch, dass das Schaltelement im Normalbetrieb dazu ausgelegt ist, geschlossen zu sein, und der Strom in der Schaltungsanordnung einem Pfad via den zweiten Zweig und die zweite Wicklung folgt.

2. Schaltungsanordnung nach Anspruch 1, die eine dritte Wicklung (324) umfasst, die mit dem ersten Punkt (350) und in Reihe mit dem ersten und dem zweiten Zweig (310, 312), die parallel verbunden sind, verbunden ist.

3. Schaltungsanordnung nach Anspruch 2, wobei die zweite Wicklung (322) und die dritte Wicklung (324) einen Teil einer selben Strombegrenzungsdrossel, CLR (140), bilden.

4. Schaltungsanordnung nach Anspruch 3, wobei eine Summe der Induktanz der zweiten Wicklung (322) und einer Induktanz der dritten Wicklung (324) gleich einer Induktanz der CLR (140) ist.

5. Schaltungsanordnung nach einem der vorhergehenden Ansprüche, wobei die erste Wicklung (320) und die zweite Wicklung (322) einen Teil eines wechselseitigen Induktors bilden.

6. Schaltungsanordnung nach einem der vorhergehenden Ansprüche, wobei das Schaltelement (340) eines von einem Hochgeschwindigkeitsschalter, HSS, und einem Neutralbusschalter, NBS, ist.

7. Schaltungsanordnung nach einem der vorhergehenden Ansprüche, wobei der erste Zweig (310) derart angeordnet ist, dass sich das Widerstandselement (330) zwischen der ersten Wicklung (320) und dem zweiten Punkt (352) befindet.

8. Schaltungsanordnung nach einem der vorhergehenden Ansprüche, wobei der zweite Zweig (312) derart angeordnet ist, dass sich das Schaltelement (340) zwischen der zweiten Wicklung (322) und dem zweiten Punkt (352) befindet.

9. Spannungsquellenwandler(VSC)-Station (400), die eine Schaltungsanordnung (430) nach einem der vorhergehenden Ansprüche umfasst.

10. Hochspannungsgleichstrom(HVDC)-Leistungsübertragungssystem (200), das mindestens eine neutrale DC-Leitung (222) beinhaltet und ferner Folgendes umfasst:
eine Spannungsquellenwandler(VSC)-Station nach Anspruch 9 oder
eine VSC-Station (210) und eine Schaltungsanordnung (280) nach einem der Ansprüche 1 bis 8;
wobei die Schaltungsanordnung (280) die VSC-Station (210) mit der neutralen DC-Leitung (222) verbindet.

11. HVDC-Leistungsübertragungssystem nach Anspruch 10, das ferner eine zweite VSC-Station nach Anspruch 9 umfasst oder
eine zweite VSC-Station (210) und eine zweite Schaltungsanordnung (282) nach einem der Ansprüche 1 bis 8;
wobei die zweite Schaltungsanordnung die zweite VSC-Station mit der neutralen DC-Leitung (222) verbindet.

12. HVDC-Leistungsübertragungssystem nach Anspruch 10 oder 11, wobei das HVDC-Leistungsübertragungssystem in einer asymmetrischen Monopolauslegung angeordnet ist.

13. VSC-Station nach Anspruch 9 oder HVDC-Leistungsübertragungssystem nach einem der Ansprüche 10 bis 12, wobei die VSC-Station mindestens einen modularen Halbbrückenmehrstufenwandler, HB-MMC, beinhaltet.

14. HVDC-Leistungsübertragungssystem nach einem der Ansprüche 10-13, das ferner eine vorhandene Strombegrenzungsdrossel, CLR, beinhaltet, die die VSC-Station mit der neutralen DC-Leitung verbindet, wobei mindestens ein Teil der vorhandenen CLR die zweite Wicklung der Schaltungsanordnung bildet.

15. HVDC-Leistungsübertragungssystem nach Anspruch 14, das ferner ein vorhandenes Schaltelement umfasst, das mit der vorhandenen CLR in Reihe verbunden ist, wobei das vorhandene Schaltelement einen Teil des Schaltelements der Schaltungsanordnung bildet.

16. Verfahren zum Betreiben einer Schaltungsanordnung nach einem der Ansprüche 1 bis 8 bei einem Wechselstrom(AC)-Wandlerbusfehler, das Folgendes umfasst:
Bestimmen, ob ein Strom durch den zweiten Zweig (312) innerhalb einer Stromunterbrechungskapazität des Schaltelements (340) liegt; und
Öffnen des Schaltelements darauf basierend, dass bestimmt wird, dass der Strom durch den zweiten Zweig innerhalb der Stromunterbrechungskapazität des Schaltelements liegt.

## Revendications

1. Agencement de circuit (300, 301) pour la décroissance d'un flux de courant transitoire entre un premier point (350) et un deuxième point (352) sur une ligne neutre à courant continu, DC, d'un système de transmission de puissance à courant continu haute tension, HVDC, comprenant :
une première branche (310) comprenant un premier enroulement (320) et un élément résistif (330) connectés en série, et
une deuxième branche (312) comprenant un deuxième enroulement (322) et un élément de commutation (340) connectés en série,
dans lequel la première branche (310) et la deuxième branche (312) sont connectées en parallèle entre le premier point (350) et le deuxième point (352), et
**caractérisé en ce qu'**une inductance du premier enroulement (320) est inférieure à une inductance du deuxième enroulement (322), et
**en ce que**, pendant un fonctionnement normal, l'élément de commutation est configuré pour être fermé et le courant emprunte un trajet dans l'agencement de circuit par le biais de la deuxième branche et du deuxième enroulement.

2. Agencement de circuit selon la revendication 1, comprenant un troisième enroulement (324) connecté au premier point (350) et en série avec les première et deuxième branches (310, 312) qui sont connectés en parallèle.

3. Agencement de circuit selon la revendication 2, dans lequel le deuxième enroulement (322) et le troisième enroulement (324) font partie d'une même réactance de limitation de courant, CLR (140).

4. Agencement de circuit selon la revendication 3, dans lequel une somme de l'inductance du deuxième enroulement (322) et d'une inductance du troisième enroulement (324) est égale à une inductance de la CLR (140).

5. Agencement de circuit selon l'une quelconque des revendications précédentes, dans lequel le premier enroulement (320) et le deuxième enroulement (322) font partie d'une inductance mutuelle.

6. Agencement de circuit selon l'une quelconque des revendications précédentes, dans lequel l'élément de commutation (340) est l'un d'un commutateur à grande vitesse, HSS, et d'un commutateur de bus neutre, NBS.

7. Agencement de circuit selon l'une quelconque des revendications précédentes, dans lequel la première branche (310) est agencée de telle sorte que l'élément résistif (330) se trouve entre le premier enroulement (320) et le deuxième point (352).

8. Agencement de circuit selon l'une quelconque des revendications précédentes, dans lequel la deuxième branche (312) est agencée de telle sorte que l'élément de commutation (340) se trouve entre ledit deuxième enroulement (322) et le deuxième point (352).

9. Station de convertisseur de source de tension, VSC, (400) comprenant un agencement de circuit (430) selon l'une quelconque des revendications précédentes.

10. Système de transmission de puissance à courant continu haute tension, HVDC, (200) comprenant au moins une ligne neutre DC (222), comprenant en outre :
une station de convertisseur de source de tension, VSC, selon la revendication 9 ; ou
une station VSC (210) et un arrangement de circuit (280) selon l'une quelconque des revendications 1 à 8 ;
dans lequel l'agencement de circuit (280) connecte la station VSC (210) à la ligne neutre DC (222).

11. Système de transmission de puissance HVDC selon la revendication 10, comprenant en outre une deuxième station VSC selon la revendication 9 ; ou
une deuxième station VSC (210) et un deuxième arrangement de circuit (282) selon l'une quelconque des revendications 1 à 8 ;
dans lequel le deuxième agencement de circuit connecte la deuxième station VSC à la ligne neutre DC (222).

12. Système de transmission de puissance HVDC selon la revendication 10 ou 11, dans lequel ledit système de transmission de puissance HVDC est agencé en configuration de monopôle asymétrique.

13. Station VSC selon la revendication 9, ou système de transmission de puissance HVDC selon l'une quelconque des revendications 10 à 12, dans lequel la station VSC comprend au moins un convertisseur modulaire multi-niveaux en demi-pont, HB-MMC.

14. Système de transmission de puissance HVDC selon l'une quelconque des revendications 10-13, comprenant en outre une réactance de limitation de courant, CLR, existante connectant la station VSC à la ligne neutre DC, dans lequel au moins une partie de la CLR existante forme le deuxième enroulement de l'agencement de circuit.

15. Système de transmission de puissance HVDC selon la revendication 14, comprenant en outre un élément de commutation existant connecté en série à la CLR existante, dans lequel ledit élément de commutation existant fait partie de l'élément de commutation de l'agencement de circuit.

16. Procédé de fonctionnement d'un agencement de circuit selon l'une quelconque des revendications 1 à 8 pendant un défaut de bus de convertisseur de courant alternatif, AC, comprenant de:
déterminer si un courant passant dans la deuxième branche (312) se situe en deçà d'une capacité d'interruption de courant de l'élément de commutation (340) ; et
ouvrir l'élément de commutation, sur la base du fait qu'il est déterminé que le courant passant dans la deuxième branche se situe en deçà de la capacité d'interruption de courant de l'élément de commutation.
